# EUROPÄISCHE PATENTSCHRIFT

(11) **EP 1 848 968 B1**
(45) Veröffentlichungstag und Bekanntmachung des Hinweises auf die Patenterteilung: **19.11.2008**
(21) Anmeldenummer: 06701617.0
(22) Anmeldetag: 31.01.2006
(51) Int. Cl.: G01F 15/06, G06M 1/04

(54) **ROLLENZÄHLWERK FÜR VERBRAUCHSZÄHLER**
DRUM COUNTER FOR SUPPLY METERS
MÉCANISME À TAMBOUR POUR COMPTEUR DE CONSOMMATION

(30) Priorität: 11.02.2005 EP 05002926
(43) Veröffentlichungstag der Anmeldung: 31.10.2007
(73) Patentinhaber: M & FC Holding LLC, Raleigh, NC 27 615 (US)
(72) Erfinder: FESSER, Ralf, 67256 Weisenheim am Sand (DE); BECKER, Walter, 68535 Edingen Neckarhausen (DE)
(74) Vertreter: Patentanwälte Möll und Bitterich
(86) Internationale Anmeldenummer: PCT/EP2006/000799
(87) Internationale Veröffentlichungsnummer: WO 2006/084602

(56) Entgegenhaltungen:
- DE-C1- 19 906 693
- DE-U1- 8 003 932

## Beschreibung

### Technisches Gebiet

Die Erfindung betrifft Rollenzählwerke für Verbrauchszähler mit hoher Empfindlichkeit und Genauigkeit gemäß dem Oberbegriff des Anspruchs 1.

### Stand der Technik

Verbrauchszähler, beispielsweise Wasserzähler, Gaszähler, Kilowattstundenzähler usw. sind überwiegend mit einem mechanischen Rollenzählwerk ausgerüstet, welches den Verbrauch aufsummiert. Diese Rollenzählwerke bestehen aus einer Mehrzahl von Zahlenrollen, die nebeneinander auf einer gemeinsamen Achse angeordnet sind, dem sogenannten Rollenpaket. Am Umfang sind die Zahlenrollen mit den Ziffern 0 bis 9 beschriftet. Zwischengetriebe sorgen für eine zehnfache Untersetzung. Eine Besonderheit stellt die erste Zahlenrolle dar. Sie wird mit Hilfe eines Schneckengetriebes kontinuierlich angetrieben. Zu diesem Zweck ist sie mit einer Vielzahl von Zähnen ausgerüstet, die mit dem Schneckengang einer Schnecke kämmen.

Schneckengetriebe zeichnen sich durch einen hohen Untersetzungsfaktor aus. Des weiteren sind sie tolerant bezüglich eines Axialversatzes des Schneckenrades. Die Schnecke hat Zylinderform und ist ein-, zwei- oder dreigängig. Die Zähne des Schneckenrades sind bei gefrästen Räder mit einer Evolventenform hergestellt und müssen deshalb ca. 30 Zähne haben. Andernfalls muss die Flankenneigung erhöht oder der Eingriff nach außen verschoben werden. Zur Vermeidung der scharf ausladenden Ecken, die zuerst mit vollem Zahndruck zum Eingriff kommen und schaben, werden im klassischen Getriebebau außen zylindrisch abgedrehte Radformen bevorzugt. Allerdings besitzen Schneckengetriebe eine relativ hohe Reibung und damit einen geringen Wirkungsgrad, je nach Ausführungsform Wirkungsgrade zwischen 40 und 80 %.

Bei den in Verbrauchszählern verwendeten Rollenzählwerken sind alle Bestandteile, ausgenommen die Achsen, aus Kunststoff gespritzt. Dabei werden Kunststoffe mit geringen Reibungskoeffizienten verwendet. Aufgrund der Kleinheit der gespritzten Kunststoffteile einerseits und unvermeidlicher Ungenauigkeiten bei der Herstellung der Spritzformen in Verbindung mit dem unvermeidlichen Abkühlschwund des Kunststoffmaterials und mechanischer Deformationen beim Ausformen, haben die kämmenden Oberflächen des Schneckengetriebes Unebenheiten und Rauhigkeiten, die die Reibung weiter erhöhen.

Schneckengetriebe für Rollenzählwerke in Verbrauchszählern werden nicht gefräst sondern aus Kunststoff gespritzt. Dabei muss der Formenbauer darauf achten, dass die Spritzteile sich einfach und schnell und vor allem ohne Beschädigung entformen lassen. Werden die Zähne entsprechend der Steigung der Schnecke schräg angestellt, wie es aus der DE-U 80 03 932 ersichtlich ist, muss das Spritzteil aus der Spritzform herausgedreht werden. Dies ist bei breiten Zähnen wie in der DE-U 80 03 932 dargestellt mit einigem Aufwand verbunden, jedoch möglich. In Rollenzählwerken, bei denen die Verzahnung der ersten Zahlenrolle mit der Schnecke kämmt, sind die Zähne sehr schmal und können deshalb beim drehenden Ausformen leicht deformiert oder gar beschädigt werden. Das ist unbefriedigend.

Es hat nicht an Versuchen gefehlt, die Schneckengetriebe durch andere Getriebe zu ersetzen. So zeigt beispielsweise die DE-U 201 06 265 einen Schrittschaltantrieb für ein Rollenzählwerk, bei dem die erste Zahlenrolle bzw. ein mit dieser verbundenes koaxiales Stiftrad aus Kunststoff auf seiner freien Stirnseite zehn kreisförmig angeordnete, axiale Schaltstifte aufweist. Diese Schaltstifte stehen wechselweise mit einem kontinuierlich angetriebenen Schaltglied aus Kunststoff eines Messwerkgetriebes in Eingriff, wobei die Drehachse des Schaltgliedes im wesentlichen quer zur Achse des Rollenzählwerks verläuft. Das mit dem Stiftrad in Eingriff stehende Schaltglied weist einen im wesentlichen zylindrischen Sperrkörper auf, der auf einer plan ebenen Stirnfläche einen exzentrisch zu seiner Drehachse angeordneten Schaltzahn mit einer im wesentlichen axialen Schaltfläche und in Drehrichtung unmittelbar hinter dem Schaltzahn eine stirnseitig und in der Mantelfläche offene Schaltnut für einen Schaltstift des sich in Schaltbewegung befindlichen Stiftrades aufweist, und der in Bezug auf die Achse des Stiftrades radial versetzt so angeordnet ist, dass er zwischen zwei Schaltvorgängen mit seiner Stirnfläche und seiner Mantelfläche arretierend zwischen zwei benachbarte Schaltstifte ragt. Auch dieses Sondergetriebe bewirkt eine Drehzahluntersetzung und eine Umlenkung der Drehrichtung um 90°. Allerdings müssen die miteinander kämmenden Räder und Stifte exakt positioniert sein, was die Herstellungskosten erhöht. Auch beruht dieses Sondergetriebe allein auf der gleitenden Bewegung und hat daher einen ebenso geringen Wirkungsgrad wie Schneckengetriebe.

### Darstellung der Erfindung

Der vorliegenden Erfindung liegt die Aufgabe zugrunde, ein Rollenzählwerk der eingangs genannten Art anzugeben, dessen Schneckengetriebe verringerte Reibung aufweist und gleichzeitig spritztechnisch günstigere Eigenschaften besitzt.

Diese Aufgabe wird gelöst durch ein Rollenzählwerk mit den Merkmalen des Anspruchs 1.

Dank der erfindungsgemäßen Ausgestaltung der Zahnflanken der ersten Zahlenrolle stehen sich jeweils eine angeschrägte und eine nicht angeschrägte Zahnflanke gegenüber. Der so gebildete Konusstumpf ist zur Trennfläche der Spritzform hin offen, so dass die gespritzten Räder mit geringerer Kraft ausgestoßen werden können als derzeit üblich. Dank der verringerten Reibung zwischen Spritzform und Spritzteil wird die Oberfläche der Zahnflanken glatter, wodurch eine geringere Reibung erreicht wird. Der größte Effekt bei der Reibungsverringerung wird jedoch durch die breite Auflagefläche dank der Parallelität zwischen den Schneckengängen der Schnecke und der tragenden Zahnflanke des Schneckenrades beim Vorwärtslauf des Verbrauchszählers erreicht.

Dank der Optimierung des Rollenzählwerks wird das Messorgan des Verbrauchszählers, bei einem Wasserverbrauchszähler beispielsweise das Flügelrad, weniger gebremst. Das Flügelrad kann daher bei geringeren Durchflüssen anlaufen und auch geringe Durchflüsse mit höherer Genauigkeit anzeigen als derzeit üblich.

### Kurze Beschreibung der Zeichnungen

Anhand der Zeichnung soll die Erfindung in Form eines Ausführungsbeispiels näher erläutert werden. Es zeigen
- Fig. 1: eine erste Zahlenrolle eines Rollenzählwerks für Verbrauchszähler hoher Empfindlichkeit und Genauigkeit in perspektivischer Darstellung,
- Fig. 2: rein schematisch und teilweise geschnitten ein Schneckengetriebe zum Antreiben der Zahlenrolle gemäß Fig. 1,
- Fig. 3: in stark vergrößerter Ausschnittdarstellung einen Schneckengang und einen damit kämmenden Zahn der Zahlenrolle gemäß Fig. 1 und
- Fig. 4: eine mit Fig. 3 vergleichbare Darstellung eines Schneckengangs und eines damit kämmenden Zahns der ersten Zahlenrolle eines Rollenzählwerks nach dem Stand der Technik.

### Wege zur Ausführung der Erfindung und gewerbliche Verwertbarkeit

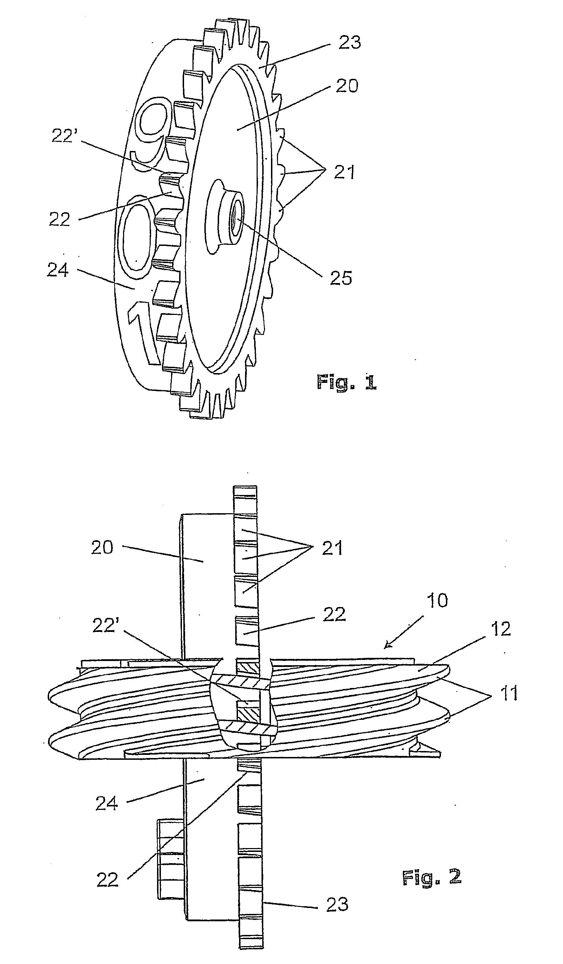

Fig. 1 zeigt in perspektivischer Darstellung die erste Zahlenrolle 20 eines Rollenzählwerks für Verbrauchszähler hoher Empfindlichkeit und Genauigkeit. Die Zahlenrolle 20 besitzt eine zentrale Öffnung 25, mit der sie mit weiteren Zahlenrollen auf eine gemeinsame Achse gesteckt wird. Eine breite Zylinderfläche 24 trägt Ziffern von Null bis Neun. Des weiteren besitzt die Zahlenrolle 20 eine umlaufende Verzahnung mit schmalen Zähnen 21, die mit einer Schnecke 10 (Fig. 2) kämmen.

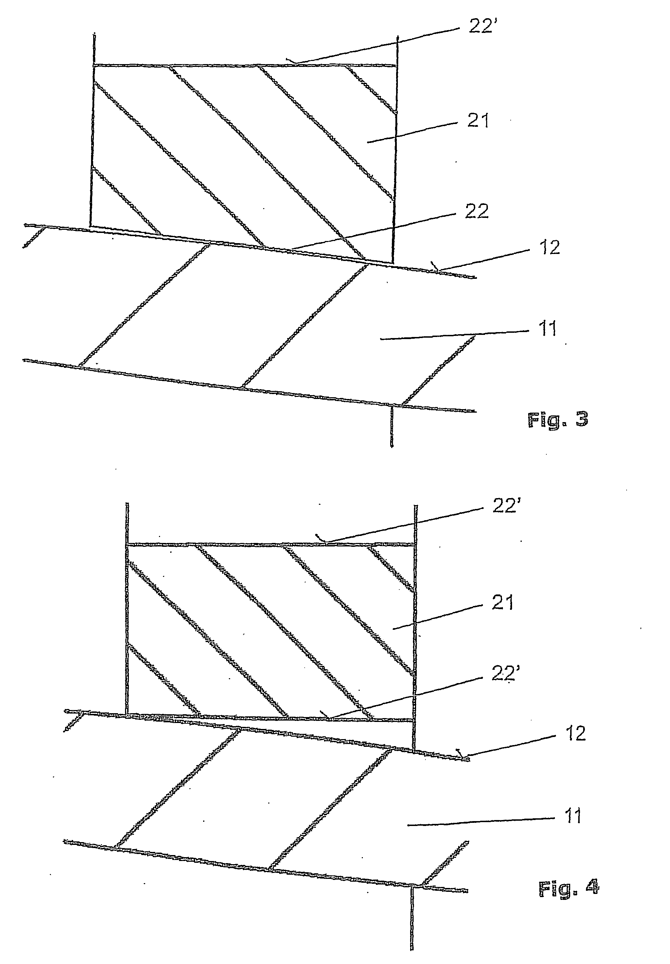

Die Zähne 21 besitzen eine angeschrägte Zahnflanke 22 und eine nicht angeschrägte Zahnflanke 22'. Einzelheiten hierzu ergeben sich aus den Fig. 2 und 3.

Wie Fig. 1 und insbesondere die Fig. 2 und 3 erkennen lassen, bilden die angeschrägte Zahnflanke 22 des einen Zahns 21 und die nicht angeschrägte Zahnflanke 22' eines benachbarten Zahns einen Konus, der das Ausstoßen des fertig gespritzten Rades 20 aus seiner Spritzform erleichtert, wenn wie beim Stand der Technik üblich die Trennfläche der Spritzform mit der Stirnfläche 23 der Verzahnung übereinstimmt.

Fig. 2 zeigt in schematischer und teilweise geschnittener Darstellung ein Schneckengetriebe, bestehend aus einer Schnecke 10 und der als Schneckenrad dienenden Zahlenrolle 20. Die Schnecke 10 besitzt Schneckengänge 11.

Zum besseren Verständnis ist durch die Schneckengänge 11 der Schnecke 10 und die Zähne 21 des Schneckenrades 20 ein senkrechter Schnitt gezeichnet. Dadurch erkennt man, dass die angeschrägten Zahnflanken 22 der Zähne 21 parallel zu den Flanken 12 der Schneckengänge 11 orientiert sind. Fig. 3 zeigt dies in vergrößerter Darstellung. Dank der Parallelität zwischen den Zahnflanken 22 der Zähne 21 und der Flanken 12 der Schneckengänge 11 ergibt sich eine breite Eingriffsfläche, die etwaige Rauhigkeiten der Zahn- und Schneckenflanken mit geringer Reibung übergleitet.

Angeschrägt werden jeweils die Zahnflanken, die beim Vorwärtslaufen des Verbrauchszählers mit den Schneckengängen 12 kämmen. Bei einem etwaigen Rückwärtslauf des Verbrauchszählers kämmen die nicht angeschrägten Zahnflanken 22' mit den Schneckengängen 11. Dabei entsteht höhere Reibung, die jedoch in der Praxis nicht stört, da beim Rückwärtslauf keine Anforderungen an die Messgenauigkeit gefordert sind.

Fig. 4 zeigt im Vergleich zur Fig. 3 das Zusammenspiel zwischen der Flanke 12 des Schneckengangs 11 und einer nicht angeschrägten Zahnflanke 22' eines Zahns 21' an einer ersten Zahlenrolle nach dem Stand der Technik. Man erkennt, dass die linke Kante des Zahns 21' auf die Schneckenflanke 12 drückt. Dabei entsteht ein hoher Druck, der in einer hohen Reibung resultiert, wobei auch kleine Rauhigkeiten der aus Kunststoff gespritzten Schneckenflanke 12 relativ hohe Bremseffekte bewirken.

## Patentansprüche

1. Rollenzählwerk für Verbrauchszähler hoher Empfindlichkeit und Genauigkeit, umfassend
- ein Schneckengetriebe, gebildet durch
- eine Schnecke (10)
- und ein damit kämmendes Schneckenrad (20) mit Zähnen (21),
- das Schneckenrad (20)
- ist die erste Zahlenrolle eines Rollenzählwerks
- und sitzt mit weiteren Zahlenrollen auf einer gemeinsamen Achse,
- alle Räder bzw. Rollen (10, 20) sind aus Kunststoff gespritzt,
**gekennzeichnet durch** die Merkmale:
- nur die an der mit der Schnecke (10) bei Vorwärtslauf des Verbrauchszählers kämmenden Flanken (22) der Zähne (21) sind angeschrägt,
- die anderen Flanken (22') sind nicht angeschrägt.

## Claims

1. A drum counter mechanism for supply meters with a high degree of sensitivity and accuracy,
comprising
- a worm gear formed by
- a worm (10)
- and a worm wheel (20) having teeth (21) meshing therewith,
- the worm wheel (20)
- is the first digit roller of a drum counter mechanism
- and is mounted with further digit rollers on a common axis,
- all wheels or rollers (10,20) are injection-moulded from plastics material,
**characterised by** the features:
- only the flanks (22) of the teeth (21) meshing with the worm (10) during forward motion of the supply meter are bevelled,
- the other flanks (22') are not bevelled.

## Revendications

1. Mécanisme à tambour pour compteurs de consommation à sensibilité et à précision élevées, comprenant
- en engrenage à vis sans fin, formé
- d'une vis sans fin (10)
- et d'une roue tangente (20) pourvue de dents (21) et engrenant dans ladite vis sans fin,
- ladite roue tangente (20)
- étant le premier disque porte-chiffres d'un mécanisme à tambour
- et étant calée sur un axe commun, avec d'autres disques porte-chiffres,
- toutes les roues ou tous les disques (10, 20) étant respectivement réalisé(e)s par injection d'une matière plastique
**caractérisé par** les caractéristiques suivantes :
- seuls sont biseautés les flancs (22) des dents (21) qui engrènent dans la vis sans fin (10) au cours de l'avance du compteur de consommation,
- les autres flancs (22') ne sont pas biseautés.
